(19) Europäisches Patentamt
European Patent Office
Office européen des brevets

(11) **EP 3 647 673 A1**

(12) **EUROPEAN PATENT APPLICATION**
published in accordance with Art. 153(4) EPC

(43) Date of publication:
**06.05.2020 Bulletin 2020/19**

(21) Application number: **18824887.6**

(22) Date of filing: **07.05.2018**

(51) Int Cl.:
**F24F 11/63** *(2018.01)*    **F24F 120/12** *(2018.01)*

(86) International application number:
**PCT/JP2018/017620**

(87) International publication number:
**WO 2019/003639 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2017   JP 2017126980**

(71) Applicant: **Mitsubishi Heavy Industries Thermal
Systems, Ltd.**
**Tokyo 108-8215 (JP)**

(72) Inventors:
• **HIRAO Toyotaka**
**Tokyo 108-8215 (JP)**

• **MIZUNO Hisao**
**Tokyo 108-8215 (JP)**
• **SHIMIZU Kenji**
**Tokyo 108-8215 (JP)**
• **SAKURAI Takao**
**Tokyo 108-8215 (JP)**
• **MARUYAMA Masanori**
**Tokyo 108-8215 (JP)**
• **NISHIKAWA Naoki**
**Tokyo 108-8215 (JP)**

(74) Representative: **Studio Torta S.p.A.**
**Via Viotti, 9**
**10121 Torino (IT)**

(54) **AIR CONDITIONING CONTROL DEVICE, AIR CONDITIONING SYSTEM, AND AIR
CONDITIONING CONTROL METHOD AND PROGRAM**

(57)    An air conditioning control device (2) includes a registration information acquisition unit configured to acquire registration information associated with identification information and the requested environment settings of each of users, an image acquisition unit configured to acquire image data about an inside of a room, a position information acquisition unit configured to collate the image data with the identification information and acquire position information in which a position of the user inside a room is identified, and an indoor unit control unit configured to perform control of indoor unit for air conditioning on the basis of the requested environment settings and the position information.

FIG. 1

EP 3 647 673 A1

Printed by Jouve, 75001 PARIS (FR)

**Description**

[Technical Field]

The present invention relates to an air conditioning control device, an air conditioning system, an air conditioning control method, and a program.
Priority is claimed on Japanese Patent Application No. 2017-126980, filed June 29, 2017, the content of which is incorporated herein by reference.

[Background Art]

A conventional air conditioner may be equipped with a function of identifying a position of each individual in a space in which a plurality of users are present and performing air conditioning control based on the identified positions. As a method of identifying the position of each individual, a method of acquiring position information in which position information of a user is set corresponding to ID information of a transmission device of an air conditioning request or a method of reading and recognizing one-dimensional barcodes and two-dimensional barcodes that include unique position information affixed to fixed desks or chairs have been proposed (for example, refer to Patent Document 1).

[Citation List]

[Patent Literature]

[Patent Document 1]
Japanese Patent No. 4737037

[Summary of Invention]

[Technical Problem]

On the other hand, in the methods described above, there is a problem of the inconvenience of a user having to inform an air conditioning control system of his or her position occurring. In addition, when the user moves, there is a problem that this inconvenience occurs again and it may not be possible to control the air conditioning by applying the position information of each user in real time.
The present invention has been made in view of the above problems, and an object thereof is to provide an air conditioning control device, an air conditioning system, an air conditioning control method, and a program which identify a position of a user and enable air conditioning control according to the preferences of a user without the inconvenience of a user having to inform an air conditioning system of his or her position occurring.

[Solution to Problem]

According to a first aspect of the present invention, an air conditioning control device includes a registration information acquisition unit configured to acquire registration information associated with identification information and requested environment settings of each of the users, an image acquisition unit configured to acquire image data about an inside of a room, a position information acquisition unit configured to collate the image data with the identification information and acquire position information in which a position of a user inside the room is identified, and an indoor unit control unit configured to perform control of indoor unit for air conditioning on the basis of the requested environment settings and the position information.
According to the second aspect of the present invention, the identification information is a face image.
In addition, according to a third aspect of the present invention, the registration information acquisition unit is configured to acquire the requested environment settings from an IC card or an environment setting terminal of a user.
In addition, according to a fourth aspect of the present invention, the registration information acquisition unit is configured to acquire the requested environment settings from an IC card or a communication terminal of a user when the face image is acquired.
In addition, according to a fifth aspect of the present invention, the registration information acquisition unit is configured to acquire the face image and the requested environment settings in an authentication for entering a building in which the inside of a room is present or the inside of a room.
In addition, according to a sixth aspect of the present invention, the air conditioning control device is configured to perform control of the indoor unit for air conditioning according to each of requested environment settings requested by a plurality of users.

In addition, according to a seventh aspect of the present invention, the registration information acquisition unit is configured to acquire image data about the inside of a room from one or a plurality of cameras included in the indoor unit for air conditioning or one or a plurality of external cameras connected to the air conditioning control device.

In addition, according to an eighth aspect of the present invention, the indoor unit control unit is configured to determine whether the user stays at the same place for a predetermined time on the basis of the position information acquired by the position information acquisition unit, and performs control of the indoor unit for air conditioning on the basis of the requested environment settings and the position information when it is determined that the user stays at the same place.

According to a ninth aspect of the present invention, an air conditioning system includes the air conditioning control device according to claim 1, and one or a plurality of pieces of indoor unit for air conditioning.

In addition, according to a tenth aspect of the present invention, an air conditioning control method includes a step of acquiring registration information associated with identification information and the requested environment settings of each of users, a step of acquiring image data about an inside of a room, a step of collating the image data with the identification information and acquiring position information in which a position of the user is identified, and a step of performing control of indoor unit for air conditioning on the basis of the requested environment settings and the position information.

In addition, according to an eleventh aspect of the present invention, a program causes a computer of an air conditioning control device that performs control of indoor unit for air conditioning according to requested environment settings associated with a user to execute a method including a step of acquiring registration information associated with identification information and the requested environment settings of each of the users, a step of acquiring image data about an inside of a room, a step of collating the image data with the identification information, a step of acquiring position information in which a position of the user is identified, and a step of performing control of indoor unit for air conditioning on the basis of the requested environment settings and the position information.

[Advantageous Effects of Invention]

According to the air conditioning control device, the air conditioning system, the air conditioning control method, and the program described above, it is possible to perform air conditioning control according to a user's preferences without the occurrence of the trouble that the user has to inform an air conditioning control system of his or her position.

[Brief Description of Drawings]

FIG. 1 is a diagram which shows an overall configuration of an air conditioning system according to a first embodiment.
FIG. 2 is a diagram which shows functional constituents of an air conditioning control device, indoor unit for air conditioning, and a registration information obtaining device according to the first embodiment.
FIG. 3 is a diagram which shows a processing flow for acquiring registration information from a user in the first embodiment.
FIG. 4 is a diagram which shows a data structure of registration information acquired by an indoor unit control unit according to the first embodiment.
FIG. 5 is a diagram which shows a processing flow of the air conditioning control device according to the first embodiment.
FIG. 6 is a diagram showing a function of the indoor unit control unit according to the first embodiment.

[Description of Embodiments]

<First embodiment>

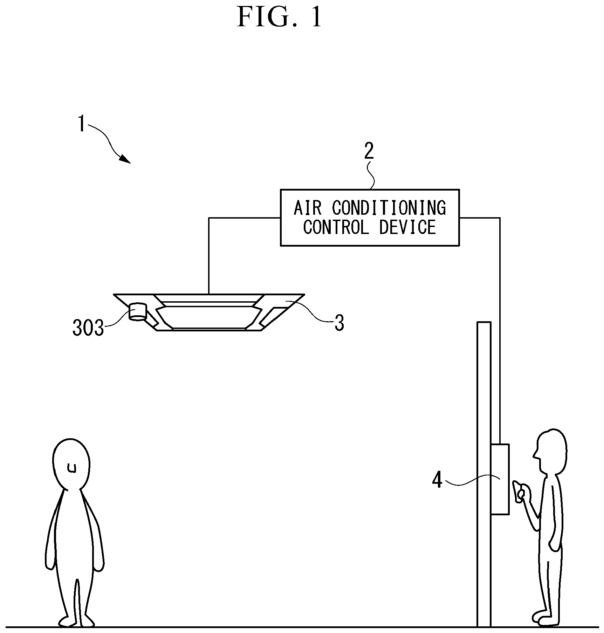

Hereinafter, an air conditioning system according to a first embodiment will be described with reference to FIGS. 1 to 6.

(Overall configuration of air conditioning system)

FIG. 1 is a diagram which shows an overall configuration of the air conditioning system according to the first embodiment.
The air conditioning system 1 according to the first embodiment is assumed to be used in an environment in which a plurality of users are present in a relatively large space such as a library, a large store, a warehouse, and a factory. However, in other embodiments, the air conditioning system 1 is not limited to the above applications.

The air conditioning system 1 according to the first embodiment includes an air conditioning control device 2, an indoor unit 3 for air conditioning, and a registration information obtaining device 4.

The air conditioning control device 2 acquires requests ("requested environment settings" to be described below) for an environment (temperature, humidity, air volume, and the like) from a plurality of users, and controls the indoor unit 3 such that the requests are satisfied as much as possible.

The indoor unit 3 is installed on a ceiling or the like of a space in which a user is present, and various operations for adjusting an environment in the space are performed according to a control command placed by the air conditioning control device 2.

As shown in FIG. 1, the indoor unit 3 includes a fan 301 capable of adjusting an air volume, a louver 302 capable of adjusting an air direction, and one or a plurality of cameras 303 which acquires image data about an inside of a room.

The air conditioning system 1 according to a first embodiment has an aspect of including only one piece of indoor unit 3 (refer to FIG. 1), but other embodiments are not limited to this aspect. That is, in the air conditioning system 1 according to another embodiment, a plurality of pieces of indoor unit 3 may be installed in the same space, and one air conditioning control device 2 may control operations of the plurality of pieces of indoor unit 3 individually.

In addition, in the air conditioning system 1 according to the first embodiment, the indoor unit 3 includes the camera 303 (refer to FIG. 1), but the air conditioning system 1 according to other embodiments may include one or a plurality of external cameras connected to the indoor unit 3, and the external camera may be, for example, a security camera installed inside a room.

The registration information obtaining device 4 performs an operation for obtaining identification information and requested environment settings from a user. Here, "identification information" of a user may be any type of identification information that can visually identify an individual, and, for example, a face image can be used for the identification information. In addition, "requested environment settings" are information indicating setting values (setting values such as a temperature, humidity, and air volume desired by the user) of an environment that each user requests of the air conditioning control device 2 through an environment setting terminal (a smartphone or the like) or an information-readable portable article (an IC card or the like).

(Functional constituent of air conditioning control device, indoor unit for air conditioning, and registration information obtaining device)

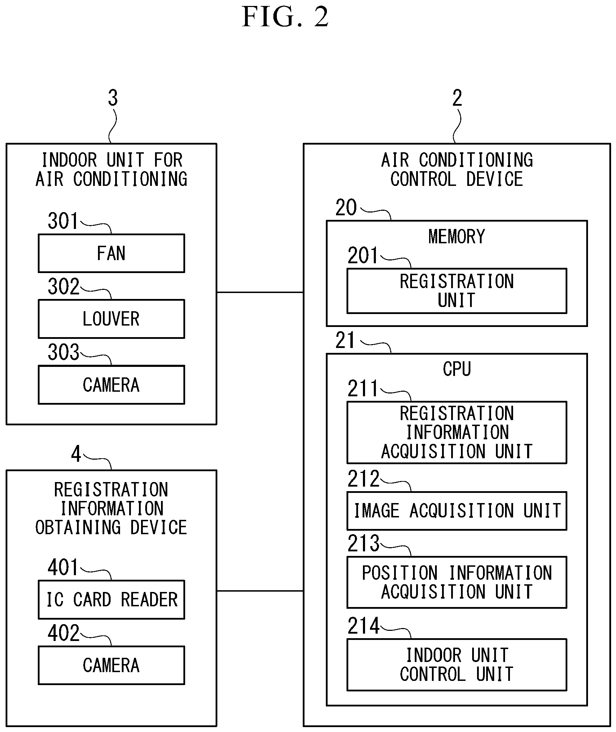

FIG. 2 is a diagram which shows functional constituents of the air conditioning control device, the indoor unit for air conditioning, and the registration information obtaining device according to the first embodiment. As shown in FIG. 2, the air conditioning control device 2 includes a memory 20 and a CPU 21. The memory 20 includes a computer-readable recording medium for recording registration information to be described in detail in the following description. In addition, the air conditioning control device 2 according to the first embodiment includes the memory 20, but the memory 20 may be present outside the air conditioning control device 2 in other embodiments, and the air conditioning control device 2 can acquire registration information from an external memory in this embodiment. The CPU 21 is a processor (microcomputer) that performs overall control of the air conditioning control device 2, and operates according to a program prepared in advance.

The memory 20 includes a registration unit 201. The registration unit 201 records registration information associated with identification information and requested environment settings of each of the users. The identification information and the requested environment settings are acquired from a user prior to air conditioning control performed by the registration information obtaining device, and recorded by the registration unit 201. Note that the identification information and the requested environment settings are obtained by the registration information obtaining device in the first embodiment, but the identification information and the requested environment settings may be obtained from a user using an arbitrary method in other embodiments.

The CPU 21 functions as a registration information acquisition unit 211, an image acquisition unit 212, a position information acquisition unit 213, and an indoor unit control unit 214 by operating according to a program.

The registration information acquisition unit 211 acquires registration information of a user recorded by the registration unit 201 in the memory 20. The registration information acquisition unit 211 may regularly acquire the registration information from the registration unit 201, and may acquire the registration information with a change in the registration information set as a trigger. Moreover, the registration information acquisition unit 211 according to the first embodiment acquires the registration information of a user from the registration unit 201, but the present invention is not limited thereto in other embodiments, and the registration information acquisition unit 211 may acquire the information directly from an environment setting terminal of a user, an IC card, or the like.

The image acquisition unit 212 acquires image data about the inside of a room through one or a plurality of cameras 303 provided in the indoor unit 3. The image acquisition unit 212 may acquire the image data about the inside of a room at predetermined time intervals, and may acquire the image data about the inside of a room in real time.

The position information acquisition unit 213 collates the identification information of a user acquired by the registration information acquisition unit 211 with the image data about the inside of a room acquired by the image acquisition unit 212, and identifies where the user is in the room, and thereby acquires position information that identifies a position of the user.

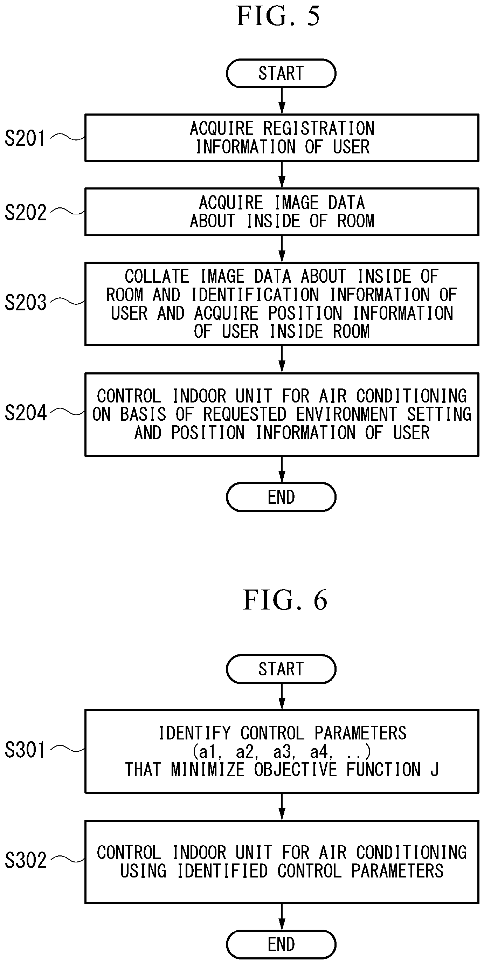

The indoor unit control unit 214 performs control of the indoor unit 3 (such as the fan 301 and the louver 302) on the basis of requested environment settings associated with a user and position information of the user. Note that air conditioning control will be described in detail below with reference to FIG. 6.

As shown in FIG. 2, the registration information obtaining device 4 includes an IC reader 401 and a camera 402.

The IC reader 401 reads requested environment settings recorded in advance in the information-readable portable article (IC card or the like) or the environment setting terminal (smartphone or the like) of a user. The IC reader 401 is assumed to be installed on an entrance gate, on a wall next to a door used for entering a room, or the like. In the first embodiment, the requested environment settings of a user are acquired through the IC reader 401, but the present invention is not limited thereto in other embodiments, and a device capable of reading data in an arbitrary method can be used. In addition, a communication terminal such as a smartphone corresponding to the IC reader 401 may also be used instead of the IC card. Note that, in the present specification, a terminal capable of recording the requested environment settings of a user is referred to as an "environment setting terminal."

The camera 402 photographs a face image as the identification information of a user. The requested environment settings and face image of a user acquired in this manner are recorded in the registration unit 201 of the air conditioning control device.

(Processing flow for acquiring registration information of user)

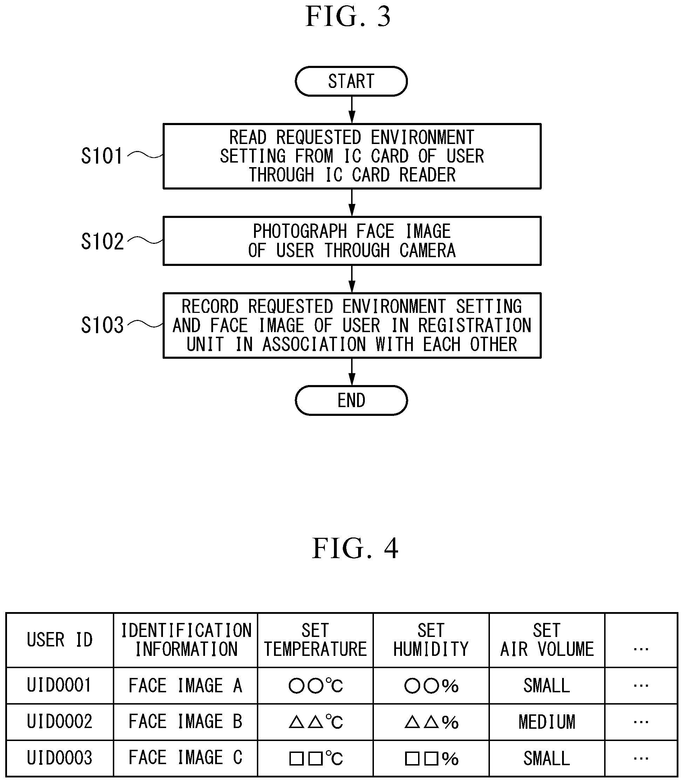

FIG. 3 is a diagram which shows a processing flow for acquiring registration information from a user in the first embodiment.

In addition, FIG. 4 is a diagram which shows a data structure of registration information recorded by the registration unit 201 according to the first embodiment.

In the first embodiment, when a user enters a building in which indoor unit for air conditioning is present or enters a room in which indoor unit for air conditioning is present, the requested environment settings and identification information of a user are acquired. In the first embodiment, a face image is used as the identification information of a user. In other embodiments, any identification information that can visually identify an individual may be used.

In general, when a user enters a building or a room, an IC reader may read information of an IC card and the like to perform authentication for entering a building or entering a room. At this time, the face image of a user can be acquired by a camera installed near the IC reader. By acquiring the face image of a user and the requested environment settings recorded in the IC card at the same time, two types of information can be linked. In the following description, a processing flow when the registration information obtaining device 4 acquires registration information from a user in the first embodiment will be described.

In S101, the requested environment settings are read from the IC card of a user through the IC reader 401. The user can cause the IC reader 401 to read his or her IC card in a contact or non-contact manner. The requested environment settings preferred by the user are recorded in the IC card of the user in advance, and, in addition to this, any type of authentication information necessary for authentication for entering a building or entering a room may be further recorded.

In S102, the face image of the user is photographed by the camera 402. The camera 402 is installed so that the face of the user who performs a reading operation of the IC card can be photographed. In addition, photographing may be performed in response to the IC card being read. In this manner, in the first embodiment, the requested environment settings and the face image of the user are acquired at the same time when the user enters a building or a room, but the present invention is not limited thereto in other embodiments, and only one of the requested environment settings and the face image may be acquired and the other may be acquired in a different method, for example, through upload by the communication terminal of the user.

In S103, the requested environment settings and face image of the user are associated with each other and recorded in the registration unit 201 as registration information. The registration information is, for example, recorded as a table as shown in FIG. 4. Here, in the registration information shown in FIG. 4, a set temperature ("OO°C"), a set humidity ("OO%"), a set air volume ("small"), and the like are associated with each type of identification information of different users ("face image A," face image B," "face image C"). In addition, a user ID ("UID001"), name information, and the like read from the IC card may also be recorded in the registration information shown in FIG. 4.

In the above description, the method of acquiring the requested environment settings and identification information of a user by an IC card has been described, but the identification information and/or requested environment settings may be uploaded to the registration unit 201 of the air conditioning control by a communication terminal such as a smartphone of a user in a different embodiment. In this embodiment, the identification information and/or requested environment settings are recorded in advance in the communication terminal of the user. The air conditioning control device 2 can record the face image and/or requested environment settings of the user in the registration unit 201 by communicating with the communication terminal of the user.

(Processing flow of air conditioning control device)

FIG. 5 is a diagram which shows a processing flow of the air conditioning control device according to the first embodiment.

In addition, FIG. 6 is a diagram which describes a function of the indoor unit control unit 214 according to the first embodiment.

Note that execution of the processing flow shown in FIG. 5 is regularly repeated from starting of the air conditioning control device 2 and the indoor unit 3.

The registration information acquisition unit 211 of the air conditioning control device 2 acquires registration information associated with each of the identification information of a user and the requested environment settings from the registration unit 201 in step S201 of FIG. 5.

In step S202, the image acquisition unit 212 of the air conditioning control device 2 acquires image data about the inside of a room through one or a plurality of cameras 303 provided in the indoor unit 3. The image data about the inside of a room may be acquired at every predetermined period or in real time.

In step S203, the position information acquisition unit 213 of the air conditioning control device 2 collates the image data about the inside of a room acquired in step S202 with the identification information of a user acquired in step S201, and identifies where the user registered in the registration information is in the room, thereby acquiring position information that identifies the position of the user.

Next, in step S204, the indoor unit control unit 214 of the air conditioning control device 2 performs control of the indoor unit for air conditioning on the basis of the requested environment settings acquired in step S201 and the position information acquired in step S203. The control of the indoor unit for air conditioning based on the requested environment settings and the position information may be performed when the user stays at the same place for a predetermined time. Specifically, the indoor unit control unit 214 determines whether the position information of the user is that of staying at the same place for a predetermined time on the basis of the position information of the user acquired by the position information acquisition unit 213, and may control the indoor unit for air conditioning based on the requested environment settings and the position information when the user stays at the same place for a predetermined time. With such a configuration, it is possible to avoid the air conditioning control changing on the basis of a temporary position of a user.

In addition, when a plurality of users are present inside a room, optimum indoor unit for air conditioning is controlled according to each requested environment setting requested by each user. Optimization of air conditioning will be described in more details below with reference to FIG. 6.

As shown in FIG. 6, the indoor unit control unit 214 identifies control parameters (a1, a2, a3, a4, .., and the like) for minimizing an objective function J (step S301). Here, the control parameters are direct command values for bringing the indoor unit 3 into a desired state, and include, for example, the rotational speed of the fan 301, and an inclination angle of the louver 302.

The objective function J is defined, for example, as in Formula (1).
[Formula 1]

$$
\left.
\begin{aligned}
x(i) &= \left(x(i)_1, x(i)_2, \ldots, x(i)_M\right) = F(a1, a2, a3, a4, \ldots) \\
x^*(i) &= \left(x^*(i)_1, x^*(i)_2, \ldots, x^*(i)_M\right) \\
J &= \sum_{i=1}^{N}\left[w_p(i)\sum_{k=1}^{M} w_d(i,k)\frac{\left|x(i)_k - x^*(i)_k\right|}{x^*(i)_k}\right]
\end{aligned}
\right\} \cdots (1)
$$

A vector x(i) shown in Formula (1) is a vector amount indicating an actual temperature, humidity, air volume, and the like at a position at which a user i (i=1, 2, .., or N) is present. The vector x(i) is made from M elements ($x(i)_1$,

$x(i)_2$, .., and $x(i)_M$), and each element ($x(i)_1$, $x(i)_2$, .., or $x(i)_M$) indicates values (a scalar amount) such as an actual temperature, humidity, and air volume at a position at which the user i is present. In addition, as shown in Formula (1), the vector x(i) is uniquely determined by a function F having the control parameters (a1, a2, a3, a4, .., and the like) of the indoor unit 3 as input variables.

Moreover, a vector x*(i) is an amount of vector indicating a temperature, humidity, an air volume, and the like desired by the user i. The vector x*(i) is made from M elements ($x*(i)_1$, $x*(i)_2$, .., and $x*(i)_M$), each element ($x*(i)_1$, $x*(i)_2$, .., or $x*(i)_M$) indicates a temperature, humidity, an air volume, and the like desired by the user i. More specifically, each element ($x*(i)_1$, $x*(i)_2$, .., or $x*(i)_M$) is a set temperature, a set humidity, a set air volume, and the like shown in the registration information of each user (FIG. 4).

As shown in Formula (1), the objective function J obtains an error rate (($x(i)_k$-$x*(i)_k$/$x*(i)_k$)) for each $k^{th}$ (k=1, .., M) element of the vector x(i), and adds up error rates by all elements. Then, the objective function J is derived by adding up a sum of the error rates obtained for each user i by all users.

"M" is the number of elements configuring the vector x(i) and the vector x*(i), and is the total number of physical quantities to be set by a user, such as a temperature, humidity, and air volume.

"N" is the number of users present in a space in which the indoor unit 3 is installed, and, more specifically, the number of users confirmed to be present in the room by collating the face images of registered users with image data.

"Wd(i,k) is a weighting coefficient separately defined for each element, and is all "1" (an equal value) in general operations. However, for example, each user may set "Wd(i,k)" for each element (temperature, humidity, air volume, .., and the like), and apply preferences indicating which physical quantities are considered important. Based on this weighting coefficient Wd(i,k), for example, it is possible to respond to detailed requests such as "I particularly wish to have a request for an "air volume" be implemented immediately after I have returned from the hot outdoors" or "Preferably I wish the "humidity" to be a preferred value during the rainy season" requested by the same person.

"Wp(i) is a weighting coefficient separately defined for each user, and is always "1" (an equal value) in general operations. However, for example, when an operation of considering requests of aged users or executive users important is performed, and the like, the weighting coefficient for each user i may be changed.

Moreover, a method of identifying a minimum value of the objective function J may be based on a known search algorithm. The function F may be based on, for example, a physical simulation of a temperature distribution, a humidity distribution, and an air volume distribution in a space based on an airflow and radiation.

If the control parameters that minimize the objective function J are identified, the indoor unit control unit 214 transmits the identified control parameters to the indoor unit 3 as a command value and controls them (step S302).

It has been described that the air conditioning control device 2 according to the first embodiment has elements used for control that are "temperature," "humidity," "air volume," and the like, but the present invention is not limited thereto in other embodiments. The air conditioning control device 2 according to other embodiments may have any form of an element as long as it is an amount related to human comfort such as "illuminance," "scent," "temperature of hot water," and "cleansing strength of toilet seat" in addition to the elements related to air conditioning described above. Note that, in the case of the example described above, the air conditioning control device 2 according to the other embodiments may be in a form of controlling not only indoor unit 3 but also lighting equipment, an aroma device, a hot water heater, and a toilet seat.

(Actions/Effects)

As described above, according to the air conditioning control device 2 according to the first embodiment, since the position of a user can be identified based on image data about the inside of the room, the user does not have to inform the air conditioning control system of his or her position. In addition, it is possible to perform air conditioning control which matches a preference of the user in real time.

In addition, in the embodiments described above, the CPU 21 of the air conditioning control device 2 described above is stored in a computer-readable recording medium in a form of a program, and the various types of processing described above are performed by a computer reading and executing this program. Moreover, the computer-readable recording medium refers to a magnetic disk, a magneto-optical disc, a CD-ROM, a DVD-ROM, a semiconductor memory, or the like. In addition, this computer program may be delivered to the computer via a communication line, and the computer that has received this delivery may execute the program.

The program described above may be for realizing some of the functions described above. Furthermore, it may be a so-called difference file (a difference program) that can realize the functions described above in combination with a program already recorded in the computer system. Moreover, the air conditioning control device 2 may be configured by a single computer or may be configured by a plurality of computers connected to be communicable in another embodiment.

As described above, although several embodiments of the present invention have been described, these embodiments are presented as examples and are not intended to limit the scope of the present invention. These embodiments can be implemented in various other forms, and various omissions, replacements, and changes can be performed in a scope not departing from the gist of the invention. These embodiments and modifications thereof are included in the invention described in the claims and equivalents thereof in the same manner as included in the scope and gist of the invention.

[Industrial Applicability]

According to the air conditioning control device, the air conditioning system, the air conditioning control method, and the program described above, it is possible to perform air conditioning control according to a preference of a user without occurrence of the trouble that the user has to inform an air conditioning system of his or her position.

[Reference Signs List]

| 1 | Air conditioning system |
|---|---|
| 2 | Air conditioning control device |
| 3 | Indoor unit for air conditioning |
| 4 | Registration information obtaining device |
| 20 | Memory |
| 301 | Fan |
| 302 | Louver |
| 303 | Camera |
| 201 | Registration unit |
| 211 | Registration information acquisition unit |
| 212 | Image acquisition unit |
| 213 | Position information acquisition unit |
| 214 | Indoor unit control unit |
| 401 | IC card |
| 402 | Camera |

**Claims**

1.  An air conditioning control device which is configured to perform control of indoor unit for air conditioning according to requested environment settings associated with a user, comprising:

    a registration information acquisition unit configured to acquire registration information associated with identification information and the requested environment settings of each of the users;
    an image acquisition unit configured to acquire image data about an inside of a room;
    a position information acquisition unit configured to collate the image data with the identification information and acquire position information in which a position of a user inside the room is identified; and
    an indoor unit control unit configured to perform control of indoor unit for air conditioning on the basis of the requested environment settings and the position information.

2.  The air conditioning control device according to claim 1,
    wherein the identification information is a face image.

3.  The air conditioning control device according to claim 1,
    wherein the registration information acquisition unit is configured to acquire the requested environment settings from an IC card or an environment setting terminal of a user.

4.  The air conditioning control device according to claim 2,
    wherein the registration information acquisition unit is configured to acquire the requested environment settings from an IC card or a communication terminal of a user when the face image is acquired.

5.  The air conditioning control device according to claim 2,
    wherein the registration information acquisition unit is configured to acquire the face image and the requested environment settings in an authentication for entering a building in which the inside of a room is present or the inside of a room.

6. The air conditioning control device according to claim 1,
wherein the indoor unit for air conditioning is controlled according to each of requested environment settings requested by a plurality of users.

7. The air conditioning control device according to claim 1,
wherein the registration information acquisition unit is configured to acquire image data about the inside of a room from one or a plurality of cameras included in the indoor unit for air conditioning or one or a plurality of external cameras connected to the air conditioning control device.

8. The air conditioning control device according to claim 1,
wherein the indoor unit control unit is configured to determine whether the user stays at the same place for a predetermined time on the basis of the position information acquired by the position information acquisition unit, and perform control of the indoor unit for air conditioning on the basis of the requested environment settings and the position information when it is determined that the user stays at the same place.

9. An air conditioning system comprising:

the air conditioning control device according to claim 1, and
one or a plurality of pieces of indoor unit for air conditioning.

10. An air conditioning control method which is a method of performing control of indoor unit for air conditioning according to requested environment settings associated with a user comprising:

a step of acquiring registration information associated with identification information and the requested environment settings of each of the users;
a step of acquiring image data about an inside of a room;
a step of collating the image data with the identification information and acquiring position information in which a position of the user is identified;
a step of performing control of indoor unit for air conditioning on the basis of the requested environment settings and the position information.

11. A program which causes a computer of an air conditioning control device which is configured to perform control of indoor unit for air conditioning according to requested environment settings associated with a user to execute the air conditioning control method according to claim 10.

# FIG. 1

AIR CONDITIONING
CONTROL DEVICE

303

3

4

# FIG. 2

**3**

INDOOR UNIT FOR
AIR CONDITIONING

301 — FAN

302 — LOUVER

303 — CAMERA

**4** — REGISTRATION
INFORMATION
OBTAINING DEVICE

401 — IC CARD READER

402 — CAMERA

**2**

AIR CONDITIONING
CONTROL DEVICE

20 — MEMORY

201 — REGISTRATION
UNIT

21 — CPU

211 — REGISTRATION
INFORMATION
ACQUISITION UNIT

212 — IMAGE ACQUISITION UNIT

213 — POSITION INFORMATION
ACQUISITION UNIT

214 — INDOOR UNIT
CONTROL UNIT

# FIG. 3

```
                    ┌──────────┐
                    │  START   │
                    └────┬─────┘
                         │
                         ▼
        ┌──────────────────────────────────────┐
        │      READ REQUESTED ENVIRONMENT       │
  S101  │     SETTING FROM IC CARD OF USER      │
        │        THROUGH IC CARD READER         │
        └───────────────────┬──────────────────┘
                            │
                            ▼
        ┌──────────────────────────────────────┐
        │        PHOTOGRAPH FACE IMAGE          │
  S102  │       OF USER THROUGH CAMERA          │
        └───────────────────┬──────────────────┘
                            │
                            ▼
        ┌──────────────────────────────────────┐
        │  RECORD REQUESTED ENVIRONMENT SETTING │
  S103  │  AND FACE IMAGE OF USER IN REGISTRATION│
        │  UNIT IN ASSOCIATION WITH EACH OTHER  │
        └───────────────────┬──────────────────┘
                            │
                            ▼
                    ┌──────────┐
                    │   END    │
                    └──────────┘
```

# FIG. 4

| USER ID | IDENTIFICATION INFORMATION | SET TEMPERATURE | SET HUMIDITY | SET AIR VOLUME | ... |
|---------|---------------------------|-----------------|--------------|----------------|-----|
| UID0001 | FACE IMAGE A | ○○℃ | ○○% | SMALL | ... |
| UID0002 | FACE IMAGE B | △△℃ | △△% | MEDIUM | ... |
| UID0003 | FACE IMAGE C | □□℃ | □□% | SMALL | ... |

# FIG. 5

```
                    ┌─────────────┐
                    │    START    │
                    └──────┬──────┘
                           │
                           ▼
         ┌──────────────────────────────────────┐
S201 ~~~ │        ACQUIRE REGISTRATION          │
         │        INFORMATION OF USER           │
         └──────────────────┬───────────────────┘
                            │
                            ▼
         ┌──────────────────────────────────────┐
S202 ~~~ │           ACQUIRE IMAGE DATA          │
         │          ABOUT INSIDE OF ROOM         │
         └──────────────────┬───────────────────┘
                            │
                            ▼
         ┌──────────────────────────────────────┐
         │   COLLATE IMAGE DATA ABOUT INSIDE OF  │
S203 ~~~ │  ROOM AND IDENTIFICATION INFORMATION OF│
         │ USER AND ACQUIRE POSITION INFORMATION │
         │          OF USER INSIDE ROOM          │
         └──────────────────┬───────────────────┘
                            │
                            ▼
         ┌──────────────────────────────────────┐
         │ CONTROL INDOOR UNIT FOR AIR CONDITIONING│
S204 ~~~ │ON BASIS OF REQUESTED ENVIRONMENT SETTING│
         │      AND POSITION INFORMATION OF USER  │
         └──────────────────┬───────────────────┘
                            │
                            ▼
                    ┌─────────────┐
                    │     END     │
                    └─────────────┘
```

# FIG. 6

```
                    ┌─────────────┐
                    │    START    │
                    └──────┬──────┘
                           │
                           ▼
         ┌──────────────────────────────────────┐
         │      IDENTIFY CONTROL PARAMETERS       │
S301 ~~~ │            (a1, a2, a3, a4, ..)        │
         │     THAT MINIMIZE OBJECTIVE FUNCTION J │
         └──────────────────┬───────────────────┘
                            │
                            ▼
         ┌──────────────────────────────────────┐
         │ CONTROL INDOOR UNIT FOR AIR CONDITIONING│
S302 ~~~ │    USING IDENTIFIED CONTROL PARAMETERS │
         └──────────────────┬───────────────────┘
                            │
                            ▼
                    ┌─────────────┐
                    │     END     │
                    └─────────────┘
```

## INTERNATIONAL SEARCH REPORT

| International application No. |
| --- |
| PCT/JP2018/017620 |

**A. CLASSIFICATION OF SUBJECT MATTER**
Int.Cl. F24F11/63(2018.01)i, F24F120/12(2018.01)n

According to International Patent Classification (IPC) or to both national classification and IPC

**B. FIELDS SEARCHED**

Minimum documentation searched (classification system followed by classification symbols)
Int.Cl. F24F11/00-11/89

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-70756 A (AZBIL CORPORATION) 09 May 2016, | 1, 3, 6, 9-11 |
| Y | paragraphs [0022]-[0082], fig. 1-11 | 2, 4, 5, 7, 8 |
| Y | JP 2006-220405 A (MITSUBISHI ELECTRIC CORP.) 24 August 2006, paragraphs [0020]-[0022], [0051], [0065], fig. 1-35 | 2, 4, 5, 7, 8 |
| X | JP 2011-169536 A (TOSHIBA CARRIER CORPORATION) 01 September 2011, paragraphs [0012]-[0071], fig. 1-13 | 1-4, 6, 7, 9-11 |
| A | | 5, 8 |
| X | JP 2015-87102 A (RICOH CO., LTD.) 07 May 2015, paragraphs [0011]-[0081], fig. 1-14 | 1, 2, 6, 7, 9-11 |
| A | | 3-5, 8 |
| A | CN 105180385 A (GUANGDONG MIDEA REFRIGERATION EQUIPMENT CO., LTD.) 23 December 2015, entire text, all drawings | 1-11 |

☐ Further documents are listed in the continuation of Box C. ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 21 June 2018 (21.06.2018) | 03 July 2018 (03.07.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

EP 3 647 673 A1

## INTERNATIONAL SEARCH REPORT
Information on patent family members

International application No.

PCT/JP2018/017620

| | | |
|---|---|---|
| JP 2016-70756 A<br>fig. 1-11 | 09 May 2016 | US 2016/0091902 A1,<br>paragraphs [0033]-[0103],<br><br>CN 105467864 A<br>KR 10-2016-0037751 A |
| JP 2006-220405 A | 24 August 2006 | Family: none |
| JP 2011-169536 A | 01 September 2011 | Family: none |
| JP 2015-87102 A<br>fig. 1-14 | 07 May 2015 | US 2015/0088313 A1,<br>paragraphs [0026]-[0103], |
| CN 105180385 A | 23 December 2015 | Family: none |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017126980 A

- JP 4737037 B